(19) Europäisches Patentamt / European Patent Office / Office européen des brevets

(11) **EP 3 131 347 A1**

(12) **EUROPEAN PATENT APPLICATION**

(43) Date of publication:
15.02.2017 Bulletin 2017/07

(51) Int Cl.:
*H04W 52/02* (2009.01)  *H04W 52/04* (2009.01)

(21) Application number: 15306290.6

(22) Date of filing: 13.08.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• KUCERA, Stepan
  **Blanchardstown, Dublin 15 (IE)**
• PIVIT, Florian
  **Blanchardstown, Dublin 15 (IE)**
• DARTOIS, Luc
  **91620 Nozay (FR)**

(74) Representative: **ALU Antw Patent Attorneys**
**Intellectual Property and Standards**
**Copernicuslaan 50**
**2018 Antwerp (BE)**

(54) **ENERGY-EFFICIENT SCHEDULING**

(57)    The present invention relates to a wireless communication unit (100; 100').

In accordance with an embodiment of the invention, the wireless communication unit comprises a scheduler (130; 130') configured to make scheduling decisions (D1; D2; D3) for scheduling user and/or control traffic (170) over one or more successive OFDM symbols (s1; s2; s3), an encoder (110) configured to synthesize the one or more OFDM symbols according to the scheduling decisions, a power amplifier (120) configured to amplify the one or more OFDM symbols for further transmission over the air, and a bias controller (140) configured to adjust a bias voltage or current ($V_{BIAS}$) of the power amplifier. The scheduler is further configured to make the scheduling decisions for the one or more OFDM symbols not to exceed a particular target power level $\left( P_T^i \right)$, and the bias controller is further configured, during the one or more OFDM symbols, to apply a particular bias voltage or current value $\left( V_{BIAS}^i \right)$ to the power amplifier that has been optimized for the particular target power level.

The present invention also relates to a method for wireless transmission.

Fig. 2

## Description

## Technical Field of the Invention

The present invention relates to wireless transmission in wireless or mobile Orthogonal Frequency Division Multiplexing (OFDM) communication systems, such as Long Term Evolution (LTE) communication systems.

## Technical Background of the Invention

In the past decade, the cellular paradigm for deployment of mobile communication networks evolved from a homogeneous single-tier model to a heterogeneous multi-tier model. Herein, small cells served by low-power low-cost base stations are deployed in an on-demand manner within the coverage range of pre-planned macro cells served by high-power high-cost base stations.

Given the relatively small coverage of small cells (even one tenth of the macro-cell diameter), i.e. the shorter transmitter-to-receiver distance, small cells make a more efficient usage of spectrum and energy and can provide for a localized capacity boost by enabling high-quality connections to unmodified user equipment. Major global network operators plane to deploy tens of thousands of small cells to improve mobile network coverage.

In denser small cell deployments, the chance that a small cell has no active user equipment to serve increases significantly. To ensure an energy-efficient operation, temporarily idle cells should be able to transition to a sleep mode by switching off most of its power-consuming hardware. Sleeping cells are currently being standardized within the 3GPP standardization of LTE Release 12, and are also within the scope of the Green-Touch project aiming to deliver the architecture, specifications and roadmap to increase network energy efficiency by a factor of 1000 compared to 2010 levels.

Yet, the problem of ensuring an equally energy-efficiency operation of macro cells is a major problem to which no clear solutions have been defined so far. This issue is exacerbated by the fact that the basal power consumption of a macro cell in stand-by mode is at the order of hundreds of Watts, which corresponds to the active mode consumption of tens/hundreds of small cells.

Unlike small cells, macro cells must establish coverage continuous both in space and time to serve highly mobile users and fill coverage holes created temporarily by sleeping small cells. This effectively excludes the application of the sleep-mode approach to the macro cell domain. Another (unrelated) reason is that the sensitive high-power macro-cell hardware is simply technically not suited for ON/OFF switching to follow some cycles of user (in)activity. Similar statements can be made about metro cells.

No universal solution is known to the problem of energy-efficient macro cell operation. In general, the design of a macro cell base station is based on employing as efficient components as possible, but it is also typically assumed that these components will be operated over a very large range of operating conditions to ensure the universal applicability of the overall end product.

Most notably, the power amplifier must deliver signals ranging between zero and tens of Watts of radiated power which is possible only by compromising on the overall efficiency (currently around 45-50% which corresponds to tens of Watts of wasted power).

A first approach for reducing macro-cell power consumption would consist in enforcing more frequently periods of zero-power transmit power by the scheduler. Specialized hardware then detects such zero-power periods and blocks any current flowing through the power amplifier. However, this approach has a detrimental effect on the end-user packet latency and cannot be considered as a universal solution due to specific hardware constraints.

A second approach applies solely to GSM systems in which some radio heads (e.g., MCTRX, MCRRH & MCTRDU) can dynamically control the bias drain by applying different voltages to preserve a reasonable efficiency. The bias control is based on self-detection of time slot power range, dynamically or by OAM configuration. Importantly, this GSM-based approach is inapplicable to LTE systems that lack the GSM guard times required for reconfiguring the power-amplifier drain bias without jeopardy on spectrum quality during transition periods.

## Summary of the Invention

It is an object of the present invention to overcome the aforementioned shortcomings and/or drawbacks.

In accordance with a first aspect of the invention, a wireless communication unit comprises a scheduler configured to make scheduling decisions for scheduling user and/or control traffic over one or more successive OFDM symbols, an encoder configured to synthesize the one or more OFDM symbols according to the scheduling decisions, a power amplifier configured to amplify the one or more OFDM symbols for further transmission over the air, and a bias controller configured to adjust a bias voltage or current of the power amplifier. The scheduler is further configured to make the scheduling decisions for the one or more OFDM symbols not to exceed a particular target power level. The bias controller is further configured, during the one or more OFDM symbols, to apply a particular bias voltage or current value to the power amplifier that has been optimized for the particular target power level.

Such a wireless communication unit typically refers to a base station (or radio access node) providing wireless (or radio) access to a data communication network, such as a macro, micro or femto evolved NodeB (eNB) operating according to Long Term Evolution (LTE) mobile communication technology.

Such a wireless communication unit may also refer to a wireless access point, such as a wifi or wimax access point.

Such a wireless communication unit may further refer to a mobile terminal, such as a mobile handset, a smart phone, a laptop and the likes, provided the mobile terminal controls the scheduling of uplink traffic.

In accordance with another aspect of the invention, a method for wireless transmission comprises making scheduling decisions for scheduling user and/or control traffic over one or more successive OFDM symbols, synthesizing the one or more OFDM symbols according to the scheduling decisions, amplifying the one or more OFDM symbols for further transmission over the air, and adjusting a bias voltage or current for the amplification. The method further comprises making the scheduling decisions for the one or more OFDM symbols not to exceed a particular target power level, and, during the one or more OFDM symbols, applying a particular bias voltage or current value that has been optimized for the particular target power level.

In one embodiment of the invention, the particular target power level is dynamically selected among a set of non-null discrete power levels, and the particular bias voltage or current value is dynamically selected among a set of optimal bias voltage or current values in one-to-one correspondence with the set of discrete power levels.

In one embodiment of the invention, the scheduling decisions comprise, for respective ones of the one or more OFDM symbols, selecting a reduced number of subcarriers among a set of available subcarriers according to the particular target power level.

In a further embodiment, the scheduling decisions further comprise selecting modulation and/or coding schemes to be respectively used over the selected subcarriers according to the particular target power level.

In still a further embodiment, the scheduling decisions comprise postponing the scheduling of an excess part of the user and/or control traffic that cannot be conveyed over the reduced number of subcarriers.

In one embodiment of the invention, the particular target power level and the bias voltage or current are adjusted on per OFDM symbol basis.

In an alternative embodiment, the particular target power level and the bias voltage or current are adjusted on a per group of OFDM symbols basis.

In one embodiment of the invention, the particular target power level is determined before the scheduling decisions are made.

In a further embodiment, the particular target power level and the particular bias voltage or current value are determined based on observed traffic statistics.

In one embodiment, the particular target power level is determined while the scheduling decisions are being made.

In one embodiment of the invention, a first particular target power level and a first particular bias voltage or current value are selected for one or more first successive OFDM symbols conveying control traffic, while a second particular target power level and a second particular bias voltage or current value are selected for one or more second successive OFDM symbols conveying user traffic only.

Embodiments of a method according to the invention correspond with the embodiments of a wireless communication unit according to the invention.

This invention solves the above problem by proposing a method for ensuring a near-optimum operation of the macro-cell power amplifier, the single most energy-demanding hardware component.

This is achieved by pro-actively shaping the amplifier load at the scheduler level: the scheduler makes the scheduling decisions in order to comply with a particular target power level at the amplifier's input. The scheduling decisions includes the selection of an appropriate number of subcarriers out of the whole set of available subcarriers, as well as the respective modulation and coding schemes to be used over those subcarriers. Indeed, the average aggregate power logarithmically scales with the subcarrier load for a given modulation scheme. The power amplifier is then configured with an appropriate bias voltage or current according to the particular target power level that has been selected.

The target power level and the corresponding bias voltage or current can be adjusted on a per symbol basis, or on per group of symbols basis, such as a radio frame, sub-frame or the likes.

Typically, a particular target power level to be met for a number of consecutive symbol periods is advertised to the scheduler, and the scheduler schedules the traffic in order to meet that target power level during those symbol periods. As a consequence, part of the user and/or control traffic may be postponed although some subcarriers are still available to convey it, but have been intentionally left unused by the scheduler in order to not exceed the advertised target power level. Alternatively, the scheduler determines a particular output power level based on its scheduling decisions, and instructs the power amplifier to adjust its bias voltage or current accordingly.

The target power level can be adjusted based on past traffic measurements, such as the amount of backlog traffic remaining in the transmission pipe. The more pending traffic, the higher the number of selected subcarriers to handle that traffic, and thus the higher the configured target power level and the configured bias voltage or current.

The invention improves both the operation and capital expenses of mobile operators, and achieves a better energy efficiency thanks to optimized power amplifier operation, a longer product life time thanks to lower stress caused by dissipated heat, and a smaller volume for the cooling solution.

Brief Description of the **Drawings**

The above and other objects and features of the invention will become more apparent and the invention itself will be best understood by referring to the following description of an embodiment taken in conjunction with the accompanying drawings wherein:

- fig. 1 represents Long Term Evolution (LTE) mobile network infrastructure;
- fig. 2 represents a base station as per the present invention;
- fig. 3 represents an alternative embodiment for a base station as per the present invention;
- fig. 4 represents a plot of the aggregate RMS power versus the number of active subcarriers for QPSK, 16-QAM and 64-QAM modulations; and
- fig. 5 represent a 3D-plot of the aggregate RMS power versus the shares of QPSK, 16-QAM and 64-QAM subcarriers in PDSCH.

**Detailed Description of the Invention**

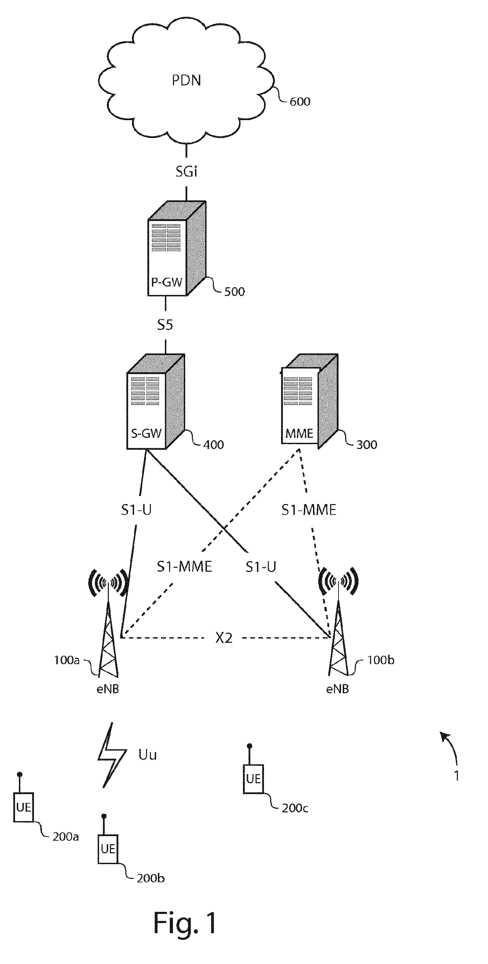

There is seen in fig. 1 a part 1 of an LTE Radio Access Network (E-RAN) and of an Evolved Packet Core (EPC) network comprising the following network elements:

- eNBs 100;
- User Equipment (UE) 200;
- a Mobility Management Entity (MME) 300;
- a Serving Gateway (S-GW) 400;
- a Packet Data Network (PDN) Gateway (P-GW) 500; and
- a PDN 600.

The eNBs 100 are coupled to the MME 300 through an s1-MME interface, and to the S-GW 400 through an S1-U interface. The S-GW 400 is further coupled to the P-GW 500 through an S5 interface. The P-GW 500 is further coupled to a PDN 600 through an SGi interface. The eNBs 100 establish neighbor relationships with neighboring eNBs through an x2 interface.

The eNBs 100 operate one or more radio cells with a given radio coverage area, typically from a few tens meters up to a few kilometers. The eNBs 100 are configured to set up and operate radio communication channels (i.e., a set of downlink and uplink radio communication resources) with the UEs 200 through a Uu radio interface.

More noticeably, the eNBs 100 host the following functions:

- Radio Resource Management (RRM): radio bearer control, radio admission control, connection mobility control, dynamic allocation of resources to UEs in both uplink and downlink (scheduling);
- Routing of user-plane data towards the S-GW;

- Scheduling and transmission of paging messages from the MME;
- Scheduling and transmission of broadcast information;
- Measurement and measurement reporting configuration for mobility and scheduling.

The MME 300 hosts the following functions:

- Non Access Stratum (NAS) signaling;
- Idle mode UE reachability, including control and execution of paging retransmission;
- Tracking Area (TA) list management for UE in idle and active mode;
- S-GW selection;
- MME selection for inter-MME handovers;
- Roaming;
- Authentication;
- Bearer management functions including dedicated bearer establishment.

The S-GW 400 hosts the following functions:

- Local Mobility Anchor point for inter-eNB handover;
- E-UTRAN idle mode downlink packet buffering and initiation of network triggered service request procedure;
- Lawful Interception;
- Packet routing and forwarding;
- Transport level packet marking in the uplink and the downlink;
- downlink and uplink charging per UE, PDN, and QoS Class Identifier (QCI).

The P-GW 500 hosts the following functions:

- UE IP address allocation and IP anchor point;
- Per-user based packet filtering (e.g., by means of deep packet inspection);
- Lawful Interception;
- Downlink and uplink service level charging, gating and rate enforcement.

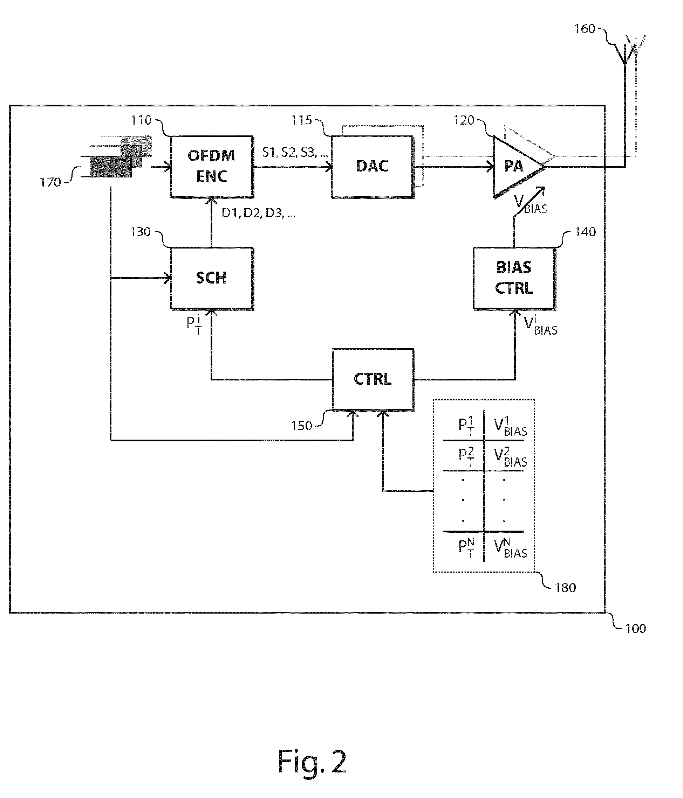

There is seen in fig. 2 further details of an eNB 100 as per the present invention with a focus on the downlink transmission path (i.e., towards the UE).

The eNB 100 comprises the following functional blocks:

- an OFDM encoder 110 (or OFDM ENC);
- a Digital-to-Analog Converter 115 (or DAC);
- a power amplifier 120 (or PA);
- a scheduler 130 (or SCH);
- a bias controller 140 (or BIAS CTRL); and
- a controller 150 (or CTRL).

The OFDM encoder 110 is coupled to the DAC 115; the DAC is further coupled to the power amplifier 120; and the power amplifier 120 is further coupled to an internal or external antenna 160. The scheduler 130 is coupled to and controls the operation of the OFDM encoder 110, while the bias controller 140 is coupled to and controls the operation of the power amplifier 120. The controller 150 is coupled to and controls the operation of both the scheduler 130 and the bias controller 140.

Typically, the OFDM encoder 110, the DAC 115, the power amplifier 120 and associated bias controller 140 form parts of a radio transceiver. The OFDM encoder 110 is located in the baseband part of the transceiver, whereas the DAC 115, the power amplifier 120 and associated bias controller 130 are located in the analog part of the transceiver.

Although the eNB 100 has been depicted with one power amplifier 120 driving one antenna 160, there may be more than one antenna port for Multiple Input Multiple Output (MIMO) or Multiple Input Single Output (MISO) operation such as beam forming, spatial diversity, etc. In such a case, there are as many DACs and power amplifiers as there are antenna ports, each power amplifier being fed with an appropriate signal from the respective DAC for driving the respective antenna.

The OFDM encoder 110 is for synthesizing the successive transmit OFDM symbols for further digital-to-analog conversion and amplification.

More specifically, the OFDM encoder 110 is for encoding and modulating user and control traffic 170, which are pending for transmission over the air, into digital OFDM symbols s1, s2, S3, etc.

The following transmit steps are typically performed within the OFDM encoder 110:

- bit scrambling of the code words to be transmitted on a physical channel;
- modulation of the scrambled bits to generate complex-valued modulation symbols, comprising the steps of parsing the scrambled bits according to the respective modulation schemes used by the respective subcarriers, and mapping each chunk of bits onto an appropriate transmit constellation point with respective amplitude and phase, possibly with Trellis encoding;
- mapping of the complex-valued modulation symbols onto one or more transmission layers;
- precoding of the complex-valued modulation symbols on each transmission layer for transmission on the respective antenna ports;
- generation of the complex-valued time-domain OFDM baseband signal for each antenna port by means of Inverse Fast Fourier Transform (IFFT) and cyclic prefix insertion; and
- upsampling and upconversion of the complex-valued time-domain OFDM baseband signal to an intermediary frequency range (yielding a real-valued time-domain signal).

The synthesized OFDM symbols s1, s2, s3, etc, are converted to the analog domain by means of the DAC 115, and the resulting OFDM analog waveforms are supplied to the power amplifier 120 for further amplification and transmission over the air. A further upconversion to the final radio-frequency range takes place in the analog domain between the DAC 115 and the power amplifier 120 by means of an analog mixer or alike (not shown).

The power amplifier 120 is configured for amplifying the OFDM waveforms and for driving the antenna 160 with the so-amplified analog signal. The power amplifier 120 operates according to an adjustable bias voltage $V_{BIAS}$ controlled by the bias controller 140. The bias voltage $V_{BIAS}$ ultimately determines the analog voltage range over which the power amplifier 120 operates (almost) linearly. Beyond that linear operational range, severe non-linear distortion starts impairing the amplified transmit signal, yielding a reduced Quality of Service (Qos) for the end-users (e.g., reduced data rates). Also, the higher the configured bias voltage $V_{BIAS}$, the broader the linear operational range of the power amplifier 120, yet the higher the power consumption of the power amplifier 120. Hence, the right balance shall be found between minimal power consumption and an appropriate QoS for the end users.

The scheduler 130 is configured to make scheduling decisions for synthesizing the successive OFDM symbols. Presently, the scheduler 130 makes scheduling decisions D1, D2, D3 for synthesizing the OFDM symbols s1, s2, s3 respectively. The scheduler 130 typically forms part of a Radio Resource Controller (RRC).

The scheduling decisions include selecting the set of subcarriers to be used for the respective OFDM symbols (active set), and selecting their respective modulation schemes (if more than one modulation scheme can be used). The scheduling decisions are based interalia on the amount and the QoS requirements of the pending traffic, as well as on the OFDM symbol position within the radio frame.

In LTE, radio resources are grouped into resource blocks that are individually assigned to the respective users depending on their respective Qos requirements. A resource block refers to $N_{SC}^{RB}$ consecutive orthogonal subcarriers across $N_{symb}^{DL}$ successive OFDM symbols. The granularity of the radio resource selection is thus lower-bounded by the size of the resources blocks.

still in LTE, depending on the considered physical channel, various modulation schemes can be used among QPSK (or 4-QAM), 16-QAM and 64-QAM. For instance, the Physical Downlink Shared CHannel (PDSCH) for transport of user traffic payload can use QPSK, 16-QAM and 64-QAM as modulation schemes, while the Physical Downlink Control CHannel (PDCCH) for transport of scheduling assignments and other control information can only use QPSK modulation scheme for increased robustness against transmission impairments.

The scheduler 130 is further supplied with a given target power level that shall not be exceeded at the amplifier's input during a given time period that spans one or more successive OFDM symbols. Presently, the scheduler 130 is supplied with a target power level $P_T^i$ to comply with during the symbol periods S1, S2, S3.

Alternatively, the target power level may refer to the RMS power at the amplifier's output, in which case the target power level shall be divided by the amplification gain before processing further with the scheduling decisions.

The scheduler 130 makes appropriate scheduling decisions for scheduling the pending traffic such that the aggregate transmit power at the amplifier's input is lower than, or equal to, the specified target power level during the given time period. In order to achieve the target power level, the scheduling decisions may involve voluntarily discarding a part of the pending traffic that could have been scheduled if the available radio resources were used to their full extent. The discarded traffic can then be postponed to subsequent OFDM symbols. Such traffic discarding may only apply to a few OFDM symbols out of all the OFDM symbols that span the given time period. The pending traffic can be prioritized in different transmit queues such that time-critical or high-priority data are handled first by the scheduler 130.

To meet the target power constraint, the scheduler 130 can compute the Root-Mean Square (RMS) power of the transmit signal before amplification by synthesizing the OFDM waveforms as a sum of complex-modulated sinusoids.

A computationally more efficient approach is to use simple look-up tables mapping subcarrier load onto RMS power. The motivation for the look-up alternative is that the RMS power of an OFDM waveform scales as a logarithmic function of the subcarriers load, i.e. the number of subcarriers modulated with non-zero complex symbols. The function magnitude depends only on the complex symbol constellation.

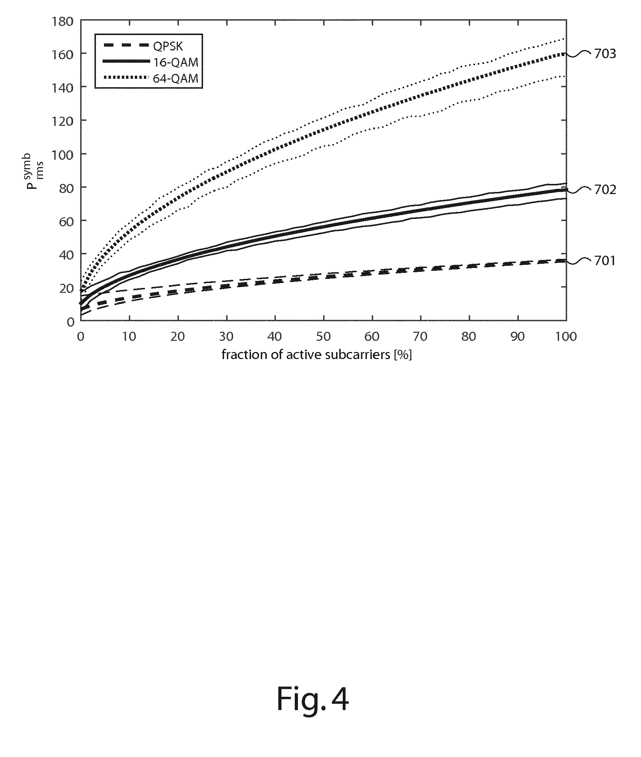

This is illustrated in fig. 4, where the RMS powers for QPSK, 16-QAM and 64-QAM constellations have been plotted as a function of the number of active subcarriers using that modulation scheme (see curves 701 for QPSK, 702 for 16-QAM and 703 for 64-QAM in fig. 4). Also, given the statistically high number of LTE subcarriers (1200 in a 20MHz bandwidth), the variance of the RMS power is very low (see the lines surrounding the curves 701, 702 and 703 in fig. 4, and representing the minimum and maximum observed RMS power). For control traffic, the output RMS power is given by curve 701 (QPSK), while for user traffic, the output RMS power scales between curve 701 (QPSK) and curve 703 (64-QAM).

More importantly however, the logarithmic power-vs-load relationship is essentially invariant to the active subcarrier order. In addition, when simultaneously using multiple constellations (QPSK, 16-QAM and 64-QAM), the magnitude of the multi-constellation log function can be easily obtained by simply linearly combining elementary logarithmic functions obtained for individual modulation schemes. The combining weights are given by the share of subcarriers modulated with a given modulation scheme.

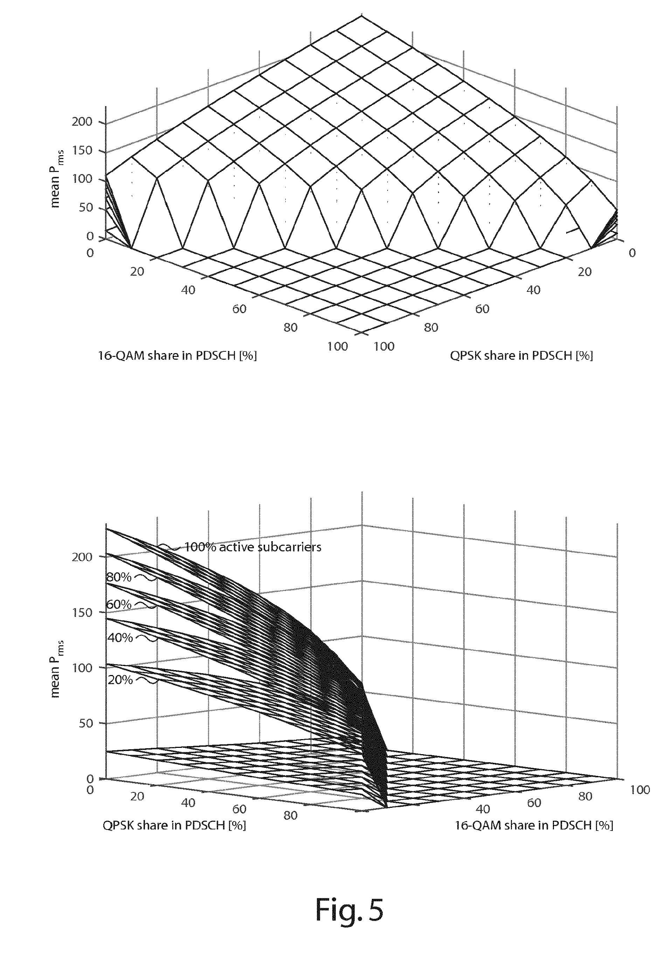

This is illustrated in fig. 5, wherein a 3D-plot is shown from two view angles. The 3D-plot represents the mean aggregate RMS output power as a function of the fraction of active subcarriers first (see respective plots when 20%, 40%, 60%, 80 and 100% of all the available subcarriers are used), and next as a function of the respective QPSK, 16-QAM and 64-QAM shares among the active subcarriers (64-QAM share = 1 - QPSK share - 16-QAM share).

The bias controller 140 is configured to bias the power amplifier 120 by using the bias voltage value $V_{BIAS}^i$ as supplied by the controller 150.

Alternatively, the bias controller 140 may control the bias current of the power amplifier 120, in which case it is supplied with a bias current value.

The controller 150 supplies both the target power level $P_T^i$ to comply with at the input of the power amplifier 120, as well the corresponding bias voltage value $V_{BIAS}^i$ that shall be used for biasing the power amplifier 120, and that achieves maximum amplification efficiency for the input power $P_T^i$. N discrete permissible power levels $\{P_T^1, P_T^2, \ldots, P_T^N\}$ and N corresponding optimal biasing voltages $\{V_{BIAS}^1, V_{BIAS}^2, \ldots, V_{BIAS}^N\}$ are held in a one-to-one correspondence table 180 for easy retrieval by the controller 150. Clearly, the discrete power levels of the OFDM waveforms enforced by the scheduler 130 are set to reflect the available levels of power amplifier biasing.

The controller 150 selects the target power level $P_T^i$ and corresponding bias voltage $V_{BIAS}^i$ based on traffic statistics, such as the amount and characteristics of pending traffic. For instance, if too much traffic is pending for transmission, that is to say if the filling level of the transmit queues exceeds some threshold, then a higher target power level and corresponding bias voltage are selected for the next symbol periods and supplied to the scheduler 130 and the bias controller 140 respectively. As a consequence, more subcarriers and/or higher-order constellation grids can be used for draining this pending traffic from the transmit queues. Nevertheless, the power consumption of the power amplifier 120 is increased on account of the higher bias voltage. The way around, if too few traffic is pending in the transmit queues, that is to say if the filling level of the transmit queues drops below some other threshold, then a lower target power level and corresponding bias voltage are selected for the next symbol periods. As a consequence, less subcarriers and/or lower-order constellation grids can be used, but still enough for handling this small amount of traffic. Yet, the power consumption of the power amplifier 120 is reduced on account of the smaller bias voltage.

Other traffic statistics may be used as well, such as the pace at which the filling levels of the respective transmit queues increase or decrease, which is indicative of the short-term traffic trends.

Also, in case control traffic and user traffic are scheduled during distinct symbol periods, the controller 150 may use two different target power levels and corresponding bias voltages: one for the symbol periods conveying control traffic only, and another one for the symbol periods conveying user traffic only. Indeed, user and control traffic do not necessarily have the same QoS requirements, and there is more modulation schemes to choose from, and thus more degrees of freedom, for scheduling user traffic. consequently, the target power level chosen for scheduling control traffic does not necessarily suit to the transport of user traffic, and vice-versa.

still also, in Heterogeneous wireless networks (Hetnet) comprising macro cells for guaranteeing constant user connectivity encompassing many small cells for handling hot spot traffic, Almost Blank Frames (ABF) are scheduled in the macro cell and in the small cells to avoid radio interference between the small cells and the macro cell. These silent ABS periods can thus be used to re-adjust the target power level and corresponding bias voltage without impairing the transmit signal.

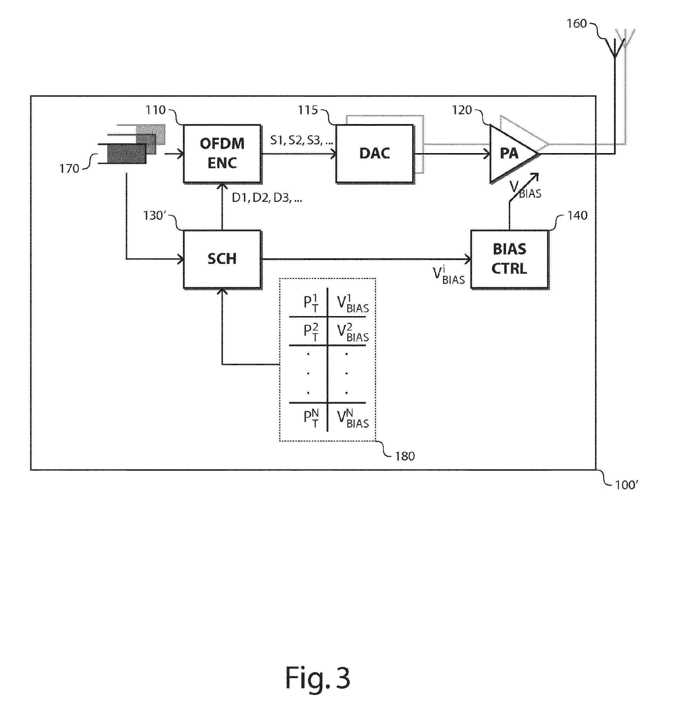

There is seen in fig. 3 an alternative eNB embodiment 100' comprising a modified scheduler 130' and no controller 150. In this embodiment, the target power level is determined by the scheduler 130' while the scheduling decision are being made. For instance, the scheduler 130' schedules the user and/or control traffic using a water-filling approach such that the resulting OFDM waveforms achieve one of the permissible power levels $\{P_T^1, P_T^2, \ldots, P_T^N\}$. Thus the scheduler 130' ensures by its scheduling decisions that the OFDM waveforms are characterized by discrete power levels: the conventional wide dynamic range of the OFDM signal is discretized to a few permissible values only. As mentioned above, such discretization can be achieved by controlling the fractional subcarrier load and the modulation schemes, i.e. by suitable transport block selection.

The optimal bias voltage $V_{BIAS}^i$ corresponding to the selected power level is then supplied to the bias controller 140 for further biasing of the power amplifier 120.

The present invention can be extended to carrier aggregation, under which multiple carrier components are managed and scheduled by a single scheduler.

In case of intra-band carrier aggregation, also a single amplifier is used for the amplification of the resulting multi-carrier OFDM signal.

In case of inter-band carrier aggregation and use of distinct power amplifiers, the multiple carrier components represent an additional degree of optimization freedom. The scheduler can now shift a given set of data between multiple bands to satisfy the discrete constraints of the respective power amplifiers.

For example, assume that two metro-cell power amplifiers operating in two different bands are each optimized for 0, 15, 25, 50, 75 and 100% loads. Then, the scheduler can divide an input data load of 40% - not natively supported by any of the two amplifiers - between the two amplifiers such that amplifier can be loaded at 15% and the other at 25%. clearly, both of them would then be loaded and optimized to a permissible level only.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. when provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, Digital Signal Processor (DSP) hardware, network processor, Application Specific Integrated Circuit (ASIC), Field Programmable Gate Array (FPGA), etc. Other hardware, conventional and/or custom, such as Read Only Memory (ROM), Random Access Memory (RAM), and non volatile storage, may also be included.

**Claims**

1. A wireless communication unit (100; 100') comprising:

   - a scheduler (130; 130') configured to make scheduling decisions (D1; D2; D3) for scheduling user and/or control traffic (170) over one or more successive OFDM symbols (s1; S2; S3),
   - an encoder (110) configured to synthesize the one or more OFDM symbols according to the scheduling decisions,
   - a power amplifier (120) configured to amplify the one or more OFDM symbols for further transmission over the air, and
   - a bias controller (140) configured to adjust a bias voltage or current ($V_{BIAS}$) of the power amplifier,

   wherein the scheduler is further configured to make the scheduling decisions for the one or more OFDM symbols not to exceed a particular target power level $\left( P_T^i \right)$,
   and wherein the bias controller is further configured, during the one or more OFDM symbols, to apply a particular bias voltage or current value $\left( V_{BIAS}^i \right)$ to the power amplifier that has been optimized for the particular target power level.

2. A wireless communication unit (100; 100') according to claim 1, wherein the particular target power level is dynamically selected among a set of non-null discrete power levels $\left( \{ P_T^1, P_T^2, \ldots, P_T^N \} \right)$, and the particular bias voltage or current value is dynamically selected among a set of optimal bias voltage or current values $\left( \{ V_{BIAS}^1, V_{BIAS}^2, \ldots, V_{BIAS}^N \} \right)$ in one-to-one correspondence with the set of discrete power levels.

3. A wireless communication unit (100; 100') according to claim 1 or 2, wherein the scheduling decisions comprise, for respective ones of the one or more OFDM symbols, selecting a reduced number of subcarriers among a set of available subcarriers according to the particular target power level.

4. A wireless communication unit (100; 100') according to claim 3, wherein the scheduling decisions further comprise selecting modulation and/or coding schemes to be respectively used over the selected subcarriers according to the particular target power level.

5. A wireless communication unit (100; 100') according to claim 3 or 4, wherein the scheduling decisions further comprise postponing the scheduling of an excess part of the user and/or control traffic that cannot be conveyed over the reduced number of subcarriers.

6. A wireless communication unit (100; 100') according to claim 1, wherein the particular target power level and the bias voltage or current are adjusted on per OFDM symbol basis.

7. A wireless communication unit (100; 100') according to claim 1, wherein the particular target power level and the bias voltage or current are adjusted on a per group of OFDM symbols basis.

8. A wireless communication unit (100) according to claim 1, wherein the particular target power level is determined before the scheduling decisions are made.

9. A wireless communication unit (100) according to claim 8, wherein the particular target power level and the particular bias voltage or current value are determined based on observed traffic statistics.

10. A wireless communication unit (100') according to claim 1, wherein the particular target power level is determined while the scheduling decisions are being made.

11. A wireless communication unit (100; 100') according to claim 1, wherein a first particular target power level and a first particular bias voltage or current value are selected for one or more first successive OFDM symbols conveying control traffic, while a second particular target power level and a second particular bias voltage or current value are selected for one or more second successive OFDM symbols conveying user traffic.

12. A wireless communication unit (100; 100') according to any of claims 1 to 11, wherein the wireless communication unit is a base station (100; 100').

13. A wireless communication unit according to any of claims 1 to 11, wherein the wireless communication unit is a wireless access point.

14. A wireless communication unit according to any of claims 1 to 11, wherein the wireless communication unit is a mobile terminal

**15.** **A method** for wireless transmission comprising:

- making **scheduling decisions** (D1; D2; D3) for scheduling **user and/or control traffic** (170) over **one or more successive OFDM symbols** (s1; s2; s3),
- synthesizing the one or more OFDM symbols according to the scheduling decisions,
- amplifying the one or more OFDM symbols for further transmission over the air, and
- adjusting **a bias voltage or current** ($V_{BIAS}$) for the amplification,

*wherein* the method further comprises:

- making the scheduling decisions for the one or more OFDM symbols not to exceed **a particular target power level** ( $P_T^i$ ), and,
- during the one or more OFDM symbols, applying **a particular bias voltage or current value** ( $V_{BIAS}^i$ ) that has been optimized for the particular target power level.

PDN

600

SGi

P-GW

500

S5

S-GW

400

MME

300

S1-U

S1-MME

S1-MME

S1-U

X2

100a

eNB

100b

eNB

Uu

UE

200c

UE

200a

1

UE

200b

# Fig. 1

Fig. 2

Fig. 3

Fig. 4

Fig. 5

Europäisches
Patentamt

European
Patent Office

Office européen
des brevets

# EUROPEAN SEARCH REPORT

Application Number

EP 15 30 6290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 404 468 A1 (ERICSSON TELEFON AB L M [SE]) 11 January 2012 (2012-01-11)<br>* paragraph [0019] - paragraph [0056] *<br>* figures 1-4 *<br>----- | 1-15 | INV.<br>H04W52/02<br>H04W52/04 |
| X | WO 2012/023697 A1 (SAMSUNG ELECTRONICS CO LTD [KR]; LEE DONG GEUN [KR]; PARK YOUNG BAE [K) 23 February 2012 (2012-02-23)<br>* abstract *<br>* paragraph [0025] - paragraph [0100] *<br>* figures 1-8 *<br>----- | 1-15 | |
| A | EP 2 439 988 A1 (ALCATEL LUCENT [FR]) 11 April 2012 (2012-04-11)<br>* abstract *<br>* paragraph [0035] - paragraph [0062] *<br>* figures 1-6 *<br>----- | 1-15 | |

TECHNICAL FIELDS
SEARCHED      (IPC)

H04W
H03F
H03G

The present search report has been drawn up for all claims

| Place of search | Date of completion of the search | Examiner |
|---|---|---|
| The Hague | 15 February 2016 | Tzimeas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6290

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2016

| Patent document cited in search report | | Publication date | Patent family member(s) | | Publication date |
|---|---|---|---|---|---|
| EP 2404468 | A1 | 11-01-2012 | EP | 2404468 A1 | 11-01-2012 |
| | | | JP | 5228117 B2 | 03-07-2013 |
| | | | JP | 2012520005 A | 30-08-2012 |
| | | | US | 2011317606 A1 | 29-12-2011 |
| | | | WO | 2010101497 A1 | 10-09-2010 |
| WO 2012023697 | A1 | 23-02-2012 | US | 2012044845 A1 | 23-02-2012 |
| | | | WO | 2012023697 A1 | 23-02-2012 |
| EP 2439988 | A1 | 11-04-2012 | CN | 103098525 A | 08-05-2013 |
| | | | EP | 2439988 A1 | 11-04-2012 |
| | | | JP | 5745071 B2 | 08-07-2015 |
| | | | JP | 2013544458 A | 12-12-2013 |
| | | | KR | 20130069791 A | 26-06-2013 |
| | | | TW | 201225724 A | 16-06-2012 |
| | | | US | 2013203434 A1 | 08-08-2013 |
| | | | WO | 2012045517 A1 | 12-04-2012 |

EPO FORM P0459

For more details about this annex : see Official Journal of the European Patent Office, No. 12/82